# EUROPEAN PATENT APPLICATION

(11) **EP 4 462 872 A1**
(43) Date of publication of application: **13.11.2024**
(21) Application number: 24175116.3
(22) Date of filing: 10.05.2024
(51) Int. Cl.: H04W 36/00, H04W 56/00, H04B 7/185

(54) **RACH-LESS HANDOVER METHOD AND USER EQUIPMENT USING THE SAME**

(30) Priority: 11.05.2023 US 202363465544 P
(71) Applicant: Industrial Technology Research Institute, 310401 Hsinchu (TW)
(72) Inventor: Cheng, Ching-Wen, Baoshan Township, Hsinchu County 308003 (TW); Huang, Nai-Lun, Zhubei City, Hsinchu County 302 (TW)
(74) Representative: Kurig, Thomas

(57) **Abstract**

A RACH-less HO method for a UE(120,420,1020) in a NTN system is provided, including: receiving a HO command from a source cell(411, 1011), wherein the HO command includes a RACH-less HO configuration and a RACH-based HO configuration associated with one of cells of the NTN system, wherein the RACH-less HO configuration includes a RACH-less available time and a UL transmission resource; determining a target cell(412,1012) according to the at least one cell configured by the HO command; performing a UL resource selection procedure to obtain a target UL transmission resource associated with the target cell(412,1012) for performing a target UL transmission to the target cell(412,1012); performing a HO confirmation procedure with the target cell(412,1012) by applying a UL timing adjustment information associated with the target UL transmission resource to perform the target UL transmission to the target cell(412,1012).

## Description

### BACKGROUND

### Technical Field

The present disclosure generally relates to RACH-less handover method and the UE using the same for a NTN system.

### Description of Related Art

In 5G NR, RACH-less Handover(HO) is a new HO technique that allows a UE to access the target cell without going through the RACH process. RACH-less HO can improve HO efficiency and reduce latency. Conditional Handover (CHO) allows the UE to trigger RACH-less HO when it meets predefined conditions. This is different from traditional HO triggered by the network, where the network decides when to hand over the UE to a new cell.

Since CHO is triggered by the UE, the network does not know the exact HO execution time. This makes it difficult to provide accurate timing adjustment information for RACH-less HO. Inaccurate timing adjustment information can cause the UE's uplink signal to misalign with the target satellite, which can degrade the performance of RACH-less HO, such as throughput and latency.

### SUMMARY

Exemplary embodiments of the disclosure provide a RACH-less handover(HO) method and a user equipment (UE) of a network system using the same.

In one or more embodiment, a RACH(Random Access Channel)-less handover (HO) method for a user equipment (UE) in a Non-Terrestrial Network (NTN) system is provided, the method including: receiving, by the UE, a HO command from a source cell of the NTN system, wherein the HO command comprises a general HO timer and at least one HO configuration, and the HO configuration comprises a RACH-less HO configuration and a RACH-based HO configuration associated with one of cells of the NTN system, wherein the RACH-less HO configuration comprises a validity duration of RACH-less resource (also known as RACH-less available time hereafter) and a UL transmission resource, wherein the RACH-less available time is to be applied for the UE to perform a UL transmission to the associated cell by using the UL transmission resource; determining, by the UE, a target cell according to the at least one cell configured by the HO command; performing, by the UE, a UL resource selection procedure to obtain a target UL transmission resource associated with the target cell for performing a target UL transmission to the target cell; performing, by the UE, a HO confirmation procedure with the target cell by applying a UL timing adjustment information associated with the target UL transmission resource to perform the target UL transmission to the target cell; and determining, by the UE, that the RACH-less HO procedure is successfully completed.

In one or more embodiment, a user equipment (UE) is provided, including: a transceiver, used for transmitting or receiving signals; a memory, used for storing a program code; and a processor, coupled to the transceiver and the memory. The processor is configured for executing the program code to implement a RACH-less HO method, wherein the RACH-less HO method including: receiving, by the UE, a HO command from a source cell of the NTN system, wherein the HO command comprises a general HO timer and at least one HO configuration, and the HO configuration comprises a RACH-less HO configuration and a RACH-based HO configuration associated with a cell of the NTN system, wherein the RACH-less HO configuration comprises a validity duration of RACH-less resource (also known as RACH-less available time) and a UL transmission resource, wherein the RACH-less available time is to be applied for the UE to perform a uplink (UL) transmission to the associated cell by using the UL transmission resource; determining, by the UE, a target cell according to the at least one cell configured by the HO command; performing, by the UE, a UL resource selection procedure to select a target UL transmission resource associated with the target cell for performing a target UL transmission to the target cell; performing, by the UE, a HO confirmation procedure with the target cell by applying the UL timing adjustment information associated with the selected target UL transmission resource to perform the target UL transmission to the target cell; and determining, by the UE, that the RACH-less HO procedure is successfully completed.

In summary, the RACH-less HO method and the UE provided by the present disclosure are capable of: determining a proper target cell when receiving a HO command from a source cell according to the RACH-less and RACH-based HO configuration carried in the HO command; selecting a UL resource to perform the UL transmission to the target cell; and applying a corresponding timing adjustment information to pre-compensate the timing of UL transmission, such that the latency during handover could be reduced.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates a communication system according to an exemplary embodiment of the present disclosure.
FIG. 2 is a block diagram that illustrates a communication device according to an exemplary embodiment of the present disclosure.
FIG. 3 is a schematic diagram that illustrates UL timing alignment for NTN system.
FIG. 4A is a schematic diagram that illustrates a legacy HO procedure.
FIG. 4B is a schematic diagram that illustrates a RACH-less HO procedure.
FIG. 5A is a schematic diagram that illustrates single RACH-less duration for performing RACH-less HO according to an exemplary embodiment of the present disclosure.
FIG. 5B is a schematic diagram that illustrates multiple RACH-less durations for performing RACH-less HO according to an exemplary embodiment of the present disclosure.
FIG. 6 is a schematic diagram that illustrates operations performed in a RACH-less HO with time-based RACH-less HO configuration according to an exemplary embodiment of the present disclosure.
FIG. 7A is a schematic diagram that illustrates HO confirmation procedure of the RACH-less HO for indicating RACH-less HO successfully complete according to an exemplary embodiment of the present disclosure.
FIG. 7B is a schematic diagram that illustrates performing RACH-based HO when RACH-less HO is failed according to an exemplary embodiment of the present disclosure.
FIG.8 is a flowchart of RAHC-less HO method according to an exemplary embodiment of the present disclosure.
FIG. 9A is a schematic diagram that illustrate a CHO execution condition is fulfilled within a single RACH-less duration according to an exemplary embodiment of the present disclosure.
FIG. 9B is a schematic diagram that illustrate a CHO execution condition is fulfilled within one of multiple RACH-less durations according to an exemplary embodiment of the present disclosure.
FIG. 10 is a schematic diagram that illustrates performing RACH-less HO when a CHO execution condition is fulfilled according to an exemplary embodiment of the present disclosure.
FIG. 11A is a schematic diagram that illustrates, for a CHO command, HO confirmation procedure of the RACH-less HO for indicating RACH-less HO successfully complete according to an exemplary embodiment of the present disclosure.
FIG. 11B is a schematic diagram that illustrates, for a CHO command, performing RACH-based HO when RACH-less HO condition is not satisfied according to an exemplary embodiment of the present disclosure.
FIG. 11C is a schematic diagram that illustrates, for a CHO command, performing RACH-based HO when RACH-less HO failed according to an exemplary embodiment of the present disclosure.
FIG. 11D is a schematic diagram that illustrates, for a CHO command, performing RACH-based HO when HO execution corresponding to the target is failed according to an exemplary embodiment of the present disclosure.
FIG. 12A is a schematic diagram that illustrates applying the earlier RAR UL resource within the RACH-less duration for transmitting first UL message *(RRCReconfigurationComplete* message) according to an exemplary embodiment of the present disclosure.
FIG. 12B is a schematic diagram that illustrates applying the earlier pre-configured UL resource within the RACH-less duration for transmitting first UL message (*RRCReconfigurationComplete* message) according to an exemplary embodiment of the present disclosure.
FIG. 13 is a schematic diagram that illustrates considering an expected wating time and waiting time threshold for the preamble transmission after CHO execution condition is fulfilled before RACH-less duration according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings(Abbreviation: Full name):
C-RNTI: Cell RNTI;CE: Control Element; CHO: Conditional HandOver; DL: Downlink; GW: Gateway; HARQ: Hybrid Automatic Repeat reQuest; HO: handoverMAC: Media Access Control; NGSO: Non-geostationary; NTN: Non Terrestrial Network; NTP: Network Time Protocol; PBCH: Physical Broadcast Channel; PCCH: Paging Control Channel; PCI: Physical Cell ID; PDCCH: Physical Downlink Control Channel; PDSCH: Physical Downlink Shared Channel; P-RNTI: Paging RNTI; RA: Random Access; RACH: Random Access Channel; RAR: Random Access Response; RNTI: Radio Network Temporary Identifier; RRC: Radio Resource Control; RRC_CONNECTED: a state of RRC protocol that UE has successfully establish at least one signaling radio bear with an access point of a radio access network and the access stratum security has been activated; RACH-ConfigDedicated: an information element which is used to specify the dedicated random access parameters; RRCReconfiguration: a message name of a message of RRC protocol; RRM: Radio Resource Management; SFN: System Frame Number; SSB: Synchronization Signal/PBCH Block; TA: Timing Advance; Tx: Transmission; UE: user equipment; UL: Uplink; Some related technologies are introduced first.

"Configured" in this disclosure may be default/predefined/fixed/configured/activated/indicated/set, but not limited herein.

RRC in this disclosure may be replaced by MAC CE, DCI, but not limited herein.

Communication device in this disclosure may be represented by UE, or gNodeB, but not limited herein.

Network device in this disclosure may be represented by gNodeB(gNB), NG-RAN or base station, but not limited herein.

Combinations of embodiments disclosed in this disclosure is not precluded.

All steps in the embodiment may not be performed in a step-by-step way.

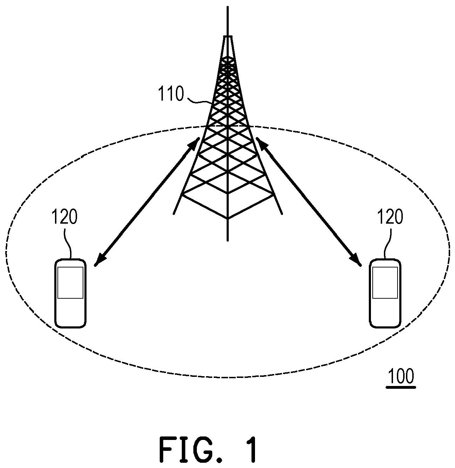

FIG. 1 is a schematic diagram that illustrates a communication system according to an exemplary embodiment of the present disclosure. Referring to FIG. 1, a communication system 100 (e.g., a Long Term Evolution (LTE) system, an LTE-Advanced (LTE-A) system, an LTE-Advanced Pro system, or a 5G NR Radio Access Network (RAN)) typically includes one or more network devices 110 and one or more UEs 120. The UE 120 communicates with the network (e.g., a Core Network (CN) such as an Evolved Packet Core (EPC) network, a 5G Core (5GC), or a non-3GPP network; a Radio Access Network (RAN) such as an Evolved Universal Terrestrial Radio Access network (E-UTRAN), a New Radio (NR) Radio Access Network (RAN), or a non-3GPP wireless access network such as Wi-Fi access network), through a RAN established by one or more network devices 110.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability, a Very Small Aperture Terminal (VSAT). The UE is configured to receive and transmit signals over an air interface to one or more cells in a radio access network.

A network device (or called base station, an NW device, or NW) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G NR), and/or LTE-A Pro. However, the scope of the present disclosure should not be limited to the above-mentioned protocols.

A network device may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The network device may connect to serve the one or more UEs through a radio interface to the network.

The network device may be operable to provide radio coverage to a specific geographical area using a plurality of cells included in the RAN. The network device may support the operations of the cells. Each cell may be operable to provide services to at least one UE within its radio coverage. Specifically, each cell may provide services to serve one or more UEs within its radio coverage (e.g., each cell schedules the Downlink (DL) and optionally Uplink (UL) resources to at least one UE within its radio coverage for DL and optionally UL packet transmission). The network device may communicate with one or more UEs in the radio communication system through the plurality of cells.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

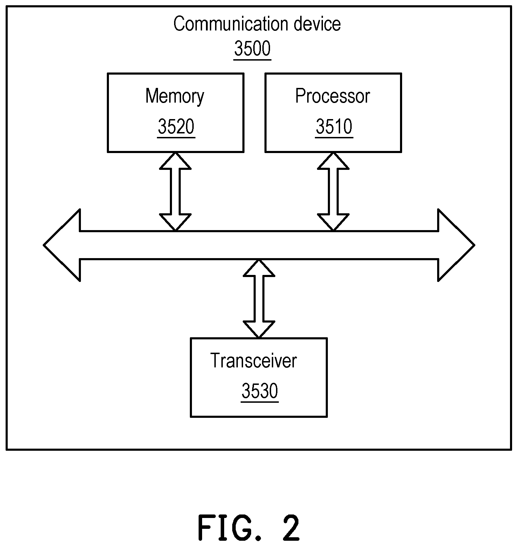

FIG. 2 is a block diagram that illustrates a communication device according to an exemplary embodiment of the present disclosure. Referring to FIG. 2, the communication device 3500 may be a UE or a network device. The communication device 3500 may include, but is not limited thereto a processor 3510. The processor 3510 (e.g., having processing circuitry) may include an intelligent hardware device, e.g., a Central Processing Unit (CPU), a microcontroller, an ASIC, and etc. The processor 3510 can call and run a computer program from a memory to implement the method in the embodiment of the disclosure.

Since the program code stored in the communication device 3500 adopts all the technical solutions of all the foregoing embodiments when being executed by the processor 3510, it at least has all the advantageous effects brought by all the technical solutions of all the foregoing embodiments, and no further description is incorporated herein.

Optionally, as shown in FIG. 2, the communication device 3500 may further include a memory 3520. The memory 3520 may include computer-storage media in the form of volatile and/or non-volatile memory. The memory 3520 may be removable, non-removable, or a combination thereof. Exemplary memory includes solid-state memory, hard drives, optical-disc drives, and etc. The processor 3510 may call and run a computer program from the memory 3520 to implement the method in the embodiment of the disclosure.

The memory 3520 may be a separate device independent of the processor 3510, or may be integrated in the processor 3510.

Optionally, as shown in FIG. 2, the communication device 3500 may further include a transceiver 3530, and the processor 3510 may control the transceiver 3530 to communicate with other devices. The transceiver 3530having a transmitter (e.g., transmitting/transmission circuitry) and a receiver (e.g., receiving/reception circuitry) may be configured to transmit and/or receive time and/or frequency resource partitioning information. In some implementations, the transceiver 3530 may be configured to transmit in different types of subframes and slots including, but not limited to, usable, non-usable and flexibly usable subframes and slot formats. The transceiver 3530 may be configured to receive data and control channels.

Specifically, the transceiver 3530 may send information or data to other devices, or receive information or data sent by other devices.

Specifically, the transceiver 3530 may include a transmitter and a receiver. The transceiver 3530 may further include an antenna, and the number of antennas may be one or more.

Optionally, the communication device 3500 may specifically be a network device in an embodiment of the disclosure, and the communication device 3500 may implement the corresponding process implemented by the network device in various methods of the embodiment of the disclosure. For the conciseness, related descriptions are omitted.

Optionally, the communication device 3500 may specifically be a mobile terminal, a terminal device, or a UE in an embodiment of the disclosure, and the communication device 3500 may implement the corresponding process implemented by the mobile terminal, the terminal device, or the UE in various methods in the embodiment of the disclosure. For conciseness, related description is omitted.

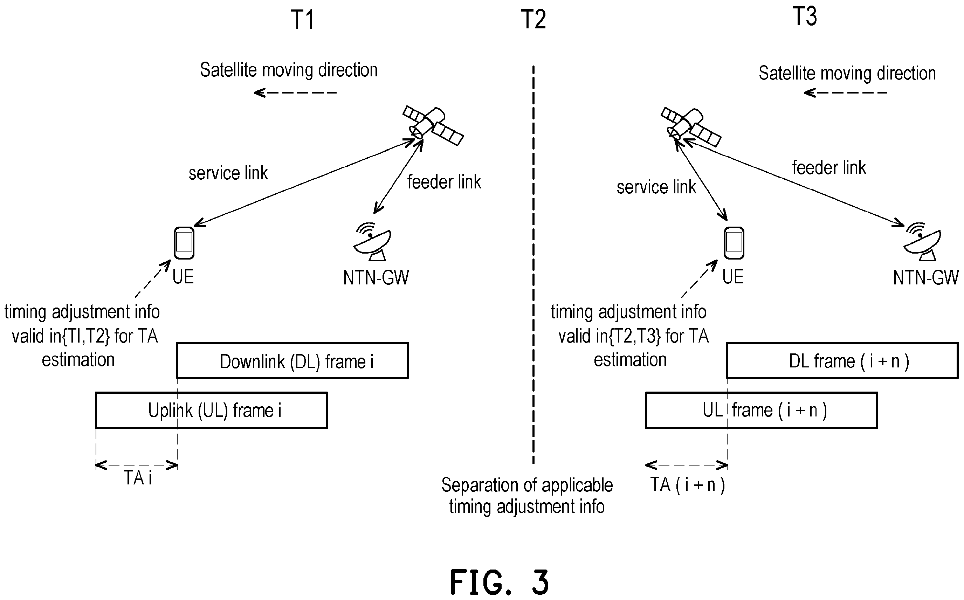

FIG. 3 is a schematic diagram that illustrates UL timing alignment for NTN system. Referring to FIG. 3, this figure shows how in NTN, the uplink (UL) timing calibration utilizes the satellite ephemeris and timing adjustment information provided by the network device to compensate for propagation delays between the UE and NTN-GW(Non-Terrestrial Network Gateway)(e.g., a network device).

In NTN, NTN-GW is responsible for the following functions:
Forwarding uplink (UL) data from the UE to the network entities at the surface of the earth of the non-terrestrial network; Forwarding downlink (DL) data from the network entities at the surface of the earth of the non-terrestrial network to the UE and may forward UL timing adjustment information provided by the non-terrestrial network to the UE. The NTN-GW acts as an earth station in the network, it is used to connect UEs in the non-terrestrial network.

In NTN, UL timing calibration relies on satellite ephemeris and network-provided timing adjustment information to compensate for propagation delays between UE and NTN-GW.

The satellite ephemeris provides the position and velocity information of the satellite, which is used to calculate the distance from the UE to the satellite. The timing adjustment information is provided by the network device to compensate for changes in propagation delay caused by satellite motion.

In FIG. 3, the timing adjustment information for UL timing advance (TA) pre-compensation is applicable in a validity duration, and different validity duration may have different value (e.g., validity time during the T2-T3 period may be less than the validity time during the T1-T2 period) due to the satellite movement. In other words, since the timing adjustment information and corresponding validity duration varied with different time period (e.g., time period T1-T2 and time period T2-T3), determining and applying a suitable timing adjustment information is important.

For RRC_CONNECTED UE(e.g., the UE established a connection to the network), when the UE location and the handover (HO) execution time are known to the network, NTN network could estimate satellite position and provide accurate timing adjustment information for RACH-less HO. That is, If the network knows the position of the UE and the HO execution time, it can estimate the satellite position. Based on the estimated satellite position, the network can provide accurate timing adjustment information. This accurate timing adjustment information can help the UE to realize UL timing calibration during RACH-less HO.

In some embodiment, a Conditional Handover (CHO) is trigger by UE upon the fulfillment of execution condition at UE. Without knowing the HO execution time, NTN network could not configure timing adjustment information properly for TA adjustment to assist UE to achieve uplink (UL) timing alignment for RACH-less HO.

In other words, For network controlled RACH-less HO, the network can estimate the HO execution time and provide accurate timing adjustment information to assist the UE in completing the UL timing calibration/compensation. However, for CHO, since the UE decides when to initiate the HO execution, the network cannot know the relevant information in advance, so it is difficult to provide the appropriate timing adjustment information, which will bring challenges to the UL timing calibration. The solutions are provided according to the presented disclosure.

In a 5G NR network, uplink synchronization between the UE and the target cell is necessary for normal communication. In an NTN network, the UL transmission timing will change due to the continuous movement of the satellite. To solve this problem, the network side can configure the UL transmission timing calibration/compensation parameters to the UE for the adjustment of UL transmission timing. The UL transmission timing calibration parameters are time-sensitive and need to be updated for maintaining the UL timing alignment between UE and the network. The network side can predict the position of the satellite based on the movement pattern of the NTN satellite and update the uplink transmission timing calibration parameters in advance.

In the case of CHO with RACH-less HO, the UE does not perform the RACH procedure, so the network side needs to indicate the UL transmission timing adjustment information in the CHO command. The network side can also provide more accurate UL transmission timing adjustment information for the UE based on the UE's information(e.g., position information, moving information, channel status information, etc.).

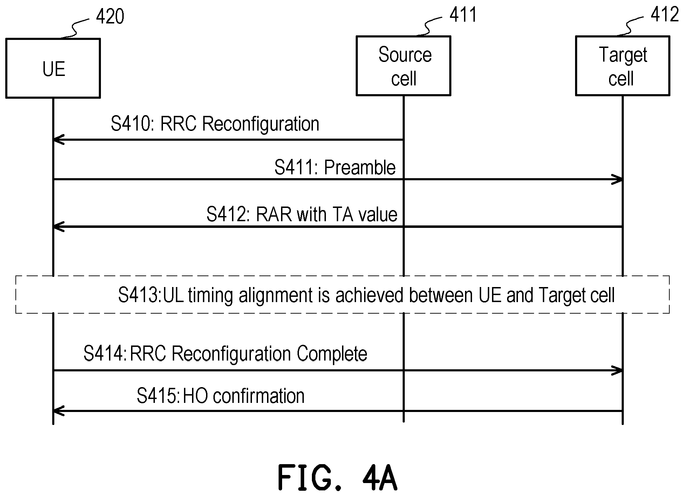

FIG. 4A is a schematic diagram that illustrates a legacy HO procedure. Referring to FIG. 4A, the legacy HO (also called as RACH-based HO hereinafter) procedure between network (e.g., source cell and target cell) includes steps S410-S415.

In step S410, the source cell 411 sends an RRC reconfiguration request message (e.g., *RRCReconfiguration* message) to the UE 420. For example, the source cell 411 intends to change the connections for a UE 420 from the source cell 411 to the target cell 412 and sends a *RRCReconfiguration* message to the UE 420.

In step S411, the UE 420 sends a preamble to the target cell 412. The target cell 412 may estimate the distance and time offset from the UE 420. The preamble is a special signal that is sent by the UE 420.

In step S412, the target cell 412 transmits a RAR(Random Access Response) with a TA(timing advance) value with UL transmission resource to the UE 420. The RAR contains a time offset value (TA value) provided by the target cell 412. The UE 420 uses this information to adjust the timing of its UL sending in order to be UL timing alignment with the target cell 412.

In step S413, the UE 420 performs UL timing adjustment to achieve UL timing alignment with the target cell 412 based on the time offset value(TA value) in the RAR message. UL timing alignment is an important synchronization process between the UE and the target cell. It ensures that the UL transmission timing of the UE 420 is synchronized with the timing of the target cell 412 such that the transmitted information from the UE 420 could be received successfully by the target cell 412. In step S414, the UE 420 sends a RRC reconfiguration complete message to the target cell 412 in response to the reception of RAR in step S412.

In step S415, the target cell 412 sends a HO confirmation to the UE 420 to indicate whether the HO procedure is successfully completed.

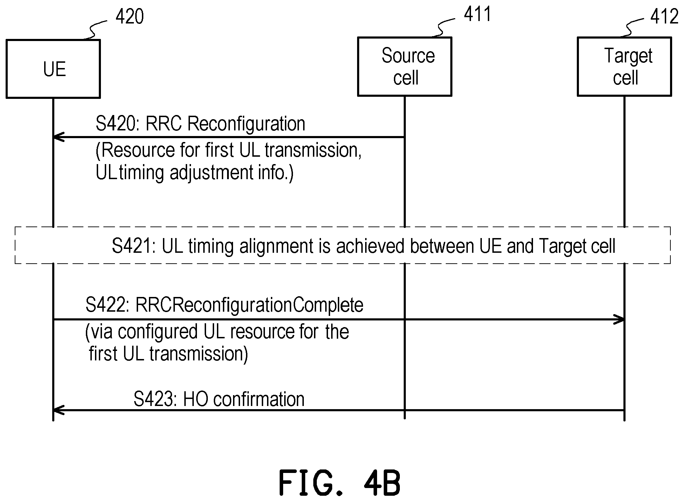

FIG. 4B is a schematic diagram that illustrates a RACH-less HO procedure. Referring to FIG. 4B, the legacy HO (also called as RACH-based HO hereinafter) procedure between network (e.g., source cell and target cell) includes steps S410-S415.

In S420, the source cell 411 sends an RRC reconfiguration request message (e.g., *RRCReconfiguration* message) to the UE 420. For example, the source cell 411 intends to change the connections for the UE 420 from source cell to the target cell 412 and sends a *RRCReconfiguration* message to the UE 420. The *RRCReconfiguration* message may include configured UL resource for first UL transmission from the UE 420 to the target cell 412, UL timing adjustment information, etc.

In step S421, the UE 420 performs UL timing adjustment to achieve UL timging alignment with the target cell 412 based on the time offset value(TA value) in the RRC reconfiguration request message. UL timing alignment is a timing synchronization process between the UE 420 and the target cell 412. It ensures that the UL transmission timing of the UE 420 is synchronized with the timing of the target cell 412 such that the transmitted information from the UE 420 could be received successfully by the target cell 412.

In step S422, the UE 420 sends a RRC reconfiguration complete message to the target cell 412 via configured UL resource for the first UL transmission.

In step S423, the target cell 412 sends a HO confirmation to the UE 420 to indicate whether the HO procedure is successfully completed.

It should be mentioned that the RACH-less HO has the following advantages over traditional HO: The RACH-less HO could have the advantage over RACH-based HO in the following aspects:

Reduced HO latency: RACH-less HO does not need to execute the RACH procedure, so it can reduce the HO latency.

Saving signal resources: RACH-less HO does not need RACH procedure, so it can save signal resources.

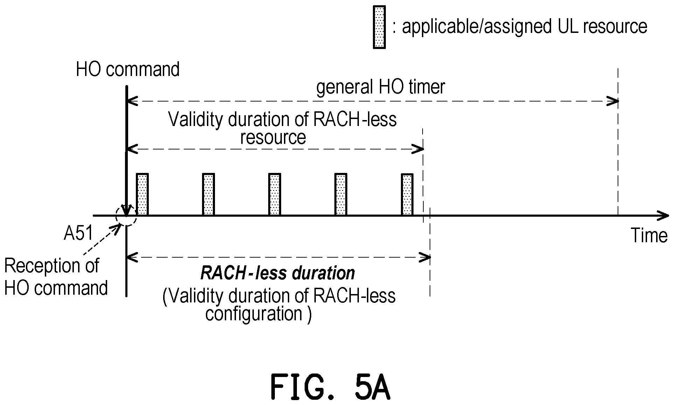

FIG. 5A is a schematic diagram that illustrates single RACH-less duration for a UE to perform RACH-less HO according to an exemplary embodiment of the present disclosure. Referring to FIG. 5A, as shown by arrow A51, after the reception of HO command, the UE starts a general HO timer (e.g., RRC Reconfiguration timer) configured by the HO command. The general HO timer is a timer for managing the success or fail of a HO procedure (e.g., performed by a RRC Reconfiguration procedure).

Furthermore, a pre-configured candidate cell(e.g., target cell) indicated in the received HO command has a validity duration of RACH-less resource (or called as RACH-less available time) for performing the RACH-less HO, and the validity duration of RACH-less resource includes a single RACH-less duration corresponding to a RACH-less HO configuration. The RACH-less duration indicates the time duration that the associated RACH-less HO configuration (including the UL timing adjustment information, UL transmission resource for the first UL transmission from UE to the target cell) is considered as valid. The validity duration of RACH-less resource is configured in the received HO command to indicate the time duration that the RACH-less resources (i.e., the RACH-less HO configuration) configured by the HO command are considered as available by the UE and the network (e.g., the UE is allowed to change connections to the configured candidate cell by performing RACH-less HO procedure only in the validity duration of RACH-less resource). The UL resources are corresponding to the candidate cell indicated by the HO command.

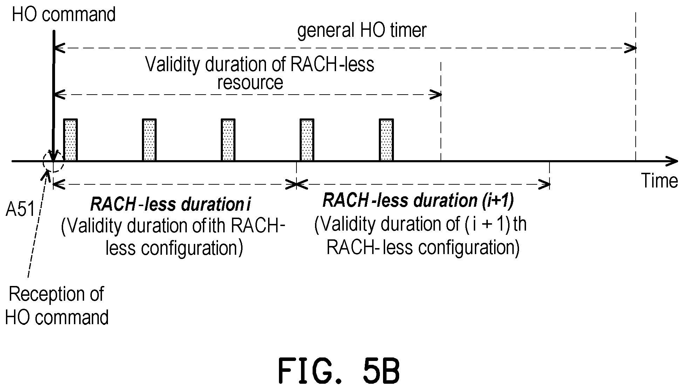

FIG. 5B is a schematic diagram that illustrates multiple RACH-less durations for a UE to perform RACH-less HO according to an exemplary embodiment of the present disclosure. Referring to FIG. 5A, as shown by arrow A51, after the reception of HO command, the UE starts a general HO timer (e.g., RRC Reconfiguration timer) configured by the HO command. The general HO timer is a timer for managing the success or fail of a HO procedure (e.g., performed by a RRC Reconfiguration procedure).

Furthermore, a pre-configured candidate cell(e.g., target cell) indicated in the received HO command consists of multiple (i.e., at least one) RACH-less durations for performing the RACH-less HO, and each of the multiple RACH-less durations indicates the time duration that the associated RACH-less HO configuration (including the UL timing adjustment information, UL transmission resource for the first UL transmission from UE to the target cell) is considered as valid. The validity duration of RACH-less resource is configured in the received HO command to indicate the time duration that the RACH-less resources (i.e., the at least one RACH-less HO configuration) configured by the HO command are considered as available by the UE and the network (e.g., the UE is allowed to change connections to the configured candidate cell by performing RACH-less HO procedure only in the validity duration of RACH-less resource). The UL resources are corresponding to the candidate cell indicated in the HO command.

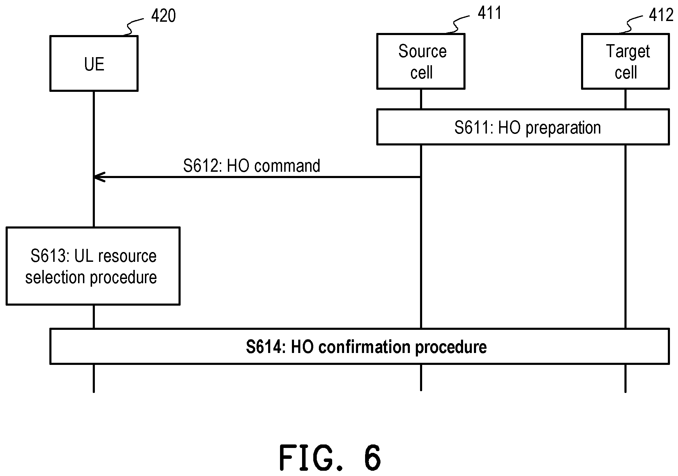

FIG. 6 is a schematic diagram that illustrates operations performed in a RACH-less HO with time-based RACH-less HO configuration according to an exemplary embodiment of the present disclosure. Referring to FIG. 6, RACH-less HO may include following steps S611 to S614.

In step S611: the source cell 411 and the target cell 412 communicate for exchanging information needed for the HO procedure to change connections for a UE 420 from the source cell 411 to the target cell 412. For example, the preparation may exchange the information of one of the following: the criteria of measured signal strength and quality for the UE to perform RACH-less HO to the target cell; the information for timing adjustment for executing RACH-less HO, and the UL transmission resource for the UE to perform the first UL transmission to the target cell 412; the identity to be used in the target cell to identify the UE (e.g., a C-RNTI for the UE) .

In step S612, the source cell 411 transmits HO command to the UE 420. The HO command may include at least RACH-less HO configuration and corresponding validity duration of RACH-less resource.

In step S613, the UE 420 performs UL resource selection procedure. For example, the target UL resource (i.e., the UL resource to be utilized for the UE to perform UL transmission to the target cell) can be determined/selected based on the time the handover procedure (i.e., the procedure to change the connections of the UE from the source cell to the target cell) is executed, based on the measured signaling power or strength associated with the target cell, or based on the availability of the RACH-less resources associated with the target cell.

In step S614, HO confirmation procedure may be performed by the UE 420 and the target cell 412. The target cell 412 may transmit a positive acknowledge to the UE 420 for notifying that the HO procedure is completed successfully. The acknowledgement could be a MAC CE, e.g., carrying a timing advance (TA) value for the first TA adjustment after RACH-less HO, or a HARQ feedback to acknowledge the successful reception of the UL transmission of the UE.

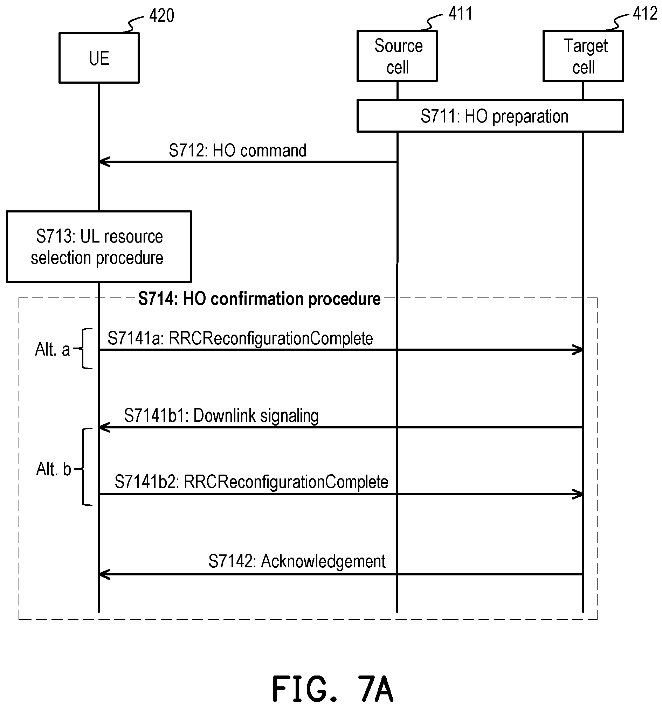

FIG. 7A is a schematic diagram that illustrates HO confirmation procedure of the RACH-less HO for indicating RACH-less HO successfully complete according to an exemplary embodiment of the present disclosure. The RACH-less HO procedure includes steps 711 to 714, wherein the steps S711-S713 are the same as the steps S611-S613 and the details thereof are omitted.

Step S714 illustrates the HO confirmation procedure. During this step, the UE will confirm that the HO procedure to change connections of the UE from the source cell to the target cell was completed successfully. Step S714 includes two steps, S7141(e.g., sending *RRCReconfigurationComplete* message to the target cell 412 by the UE) and S7142(e.g., receiving response from the target cell 412 by the UE 420), wherein step S7141 includes two alternatives(alt.a and alt.b), the alt.a includes step S7141a, and the alt.b includes steps S7141b1 and S7141b2.

In step S7141a, the UE 420 sends a *RRCReconfigurationComplete* message to the target cell 412 via a pre-configured UL resource of the target cell 412. The pre-configured UL resource of the target cell is provided via step S712 from the source cell 411 to the UE 420.

In step S7141b1, a PDCCH(Physical Downlink Control Channel) indication addressed to the C-RNTI(Candidate Cell RNTI(Radio Network Temporary Identifier)) assigned by the target cell 412 for identifying the UE 420 in the target cell 412, carrying an UL grant of the target cell S412, is sent to the UE 420.

In step S7141b2, the UE 420 sends a *RRCReconfigurationComplete* message to the target cell 412 via the UL resource of the target cell 412, wherein the UL resource of the target cell 412 is assigned by step S7141b1.

In step S7142, the target cell 412 sends an acknowledgement to the UE 420 to acknowledge the successful reception of the *RRCReconfigurationComplete.* When receiving the (positive) acknowledgement, the UE 420 determines that the RACH-less HO procedure is completed successfully.

During the RACH-less HO process, the UE 420 changes connections from the source cell 411 to the target cell 412. Since the distance between a UE to the source cell may be different from the distance between the UE and the target cell, there may be propagation delay differences between UE and the two cells, the UE 420 needs to adjust the timing of its UL transmissions to ensure that its signals could be correctly received by the target cell 412. Timing Advance (TA) is the parameter used to adjust the timing of UL transmission of the UE 420.

After the UE 420 performing the UL transmission of RACH-less HO, the target cell 412 may use the MAC CE as the positive acknowledgement of the RACH-less HO and the acknowledgement may contain a first timing advance (TA) value. The UE adjusts its timing for UL transmissions based on the first timing advance (TA) value transmitted by the MAC CE. The acknowledgement could be a HARQ feedback: a HARQ ACK to positively acknowledge the successful reception of the UL transmission of the UE, and a HARQ NACK to negatively acknowledge the failed reception of the UL transmission of the UE.

If the RACH-less HO procedure cannot be completed successfully before the end of the validity duration of RACH-less resource, the RACH-less HO procedure is considered as failed and the UE 420 may use the RACH-based HO procedure to implement the HO.

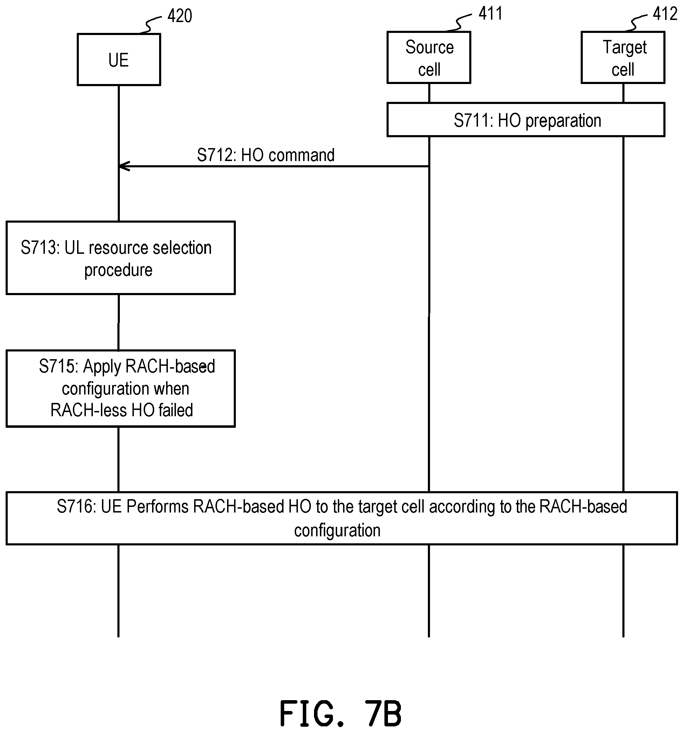

FIG. 7B is a schematic diagram that illustrates performing RACH-based HO when RACH-less HO is failed according to an exemplary embodiment of the present disclosure. Referring to FIG. 7B, steps S711-S713 are the same as the steps S711-S713 in FIG. 7A, and the details are omitted.

In step S715, in response to determining that the RACH-less HO procedure is failed (e.g., the validity duration of RACH-less resource is expired or receiving a "negative" acknowledgement from the target cell 412), the UE 420 applies the RACH-based configuration carried by the HO command received in step S712 to perform Random Access procedure to the target cell 412.

In step S716, UE 420 performs RACH-based HO procedure to the target cell 412 according to the RACH-based configuration.

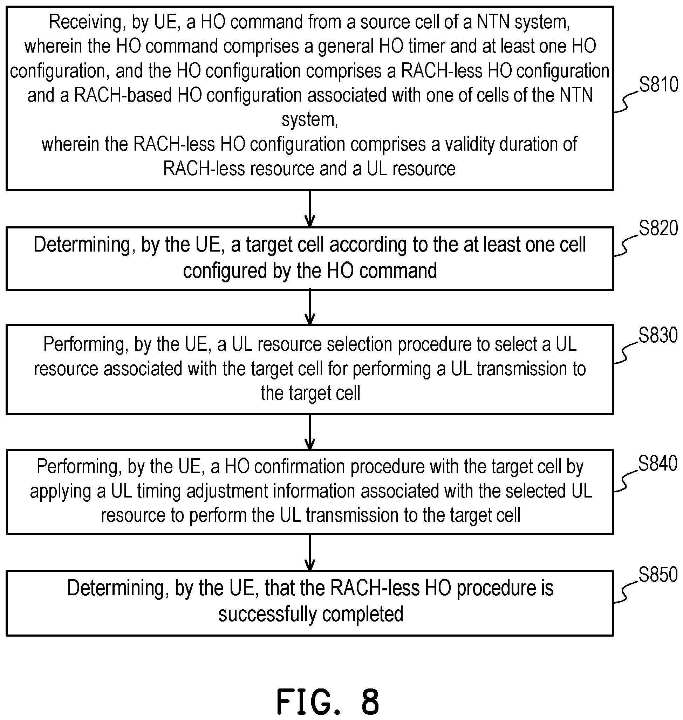

FIG.8 is a flowchart of RAHC-less HO method according to an exemplary embodiment of the present disclosure. Referring to FIG. 8, in step S810, receiving, by UE, a HO command from a source cell of a NTN system. Wherein, the HO command includes a general HO timer and at least one HO configuration, and the HO configuration comprises a RACH-less HO configuration and a RACH-based HO configuration associated with one of cells of the NTN system, wherein the RACH-less HO configuration comprises a validity duration of RACH-less resource and a UL resource.

In an embodiment, A HO command includes the configuration of a time-based RACH-less HO configuration. The time-based RACH-less HO configuration corresponding each of the at least one cell in the HO command further includes at least one of the following information:
(1) A cell ID: cell ID of the target cell, e.g., a PCI, a Cell Global Identity (CGI);
(2) A C-RNTI: the C-RNTI to be used in the target cell to identify the UE;
(3) At least one CHO execution condition: each CHO execution condition comprises at least one event, wherein when the at least one event is met, the CHO execution condition is considered as fulfilled, wherein the event may associate with: a measurement-based threshold, a location-based threshold, or a time-based threshold, wherein each event may comprises an entering condition to present the start of the event and /or a leaving condition to present the end of the fulfillment of the event;
(4) A general HO timer: a timer for managing the success or fail of a HO procedure (e.g., a RRC Reconfiguration procedure to change UE connections from a first cell to a second cell);
(5) The RACH-based HO configuration, a handover configuration for UE to perform RACH-based HO to the target cell;
(6) RACH-less configuration list: include at least one RACH-less configuration;
(7) A RACH-less HO timer: a timer for managing the success or fail of an UL transmission attempt to confirm the RACH-less HO. RACH-less HO timer may start upon the latest UL transmission to confirm the RACH-less HO. The timer could be indicated by a length of time, e.g., in unit of slot, subframe, millisecond, second;
(8) UL resource(ulResource): if configured, the resource is used for the UE to perform the UL transmission to confirm the RACH-less HO to the associated cell. The ulResource could be e.g., a type 1 configured grant (which is configured by RRC message), or a specific UL resource configured by a time and frequency configuration, wherein the ulResource may associated with a beam associated information, or a subcarrier space and a UE-specific search space;
(9) UL resource validity time: if configured, presents the validity time of associated ulResource for RACH-less HO. The validity time could be indicated by a length of time or a timer, e.g., in unit of slot, subframe, millisecond, second; and
(10) A RACH-less HO condition, for applying the RACH-less HO configuration, wherein the RACH-less HO condition includes one of the following: a measurement-based criteria, a time-based criteria and a location-based criteria, wherein UE may only perform RACH-less HO to the target cell when one of the RACH-less HO condition is fulfilled; wherein the measurement-based criteria includes at least one of the following: RSRP threshold, RACH-less HO could be triggered if the measured RSRP associated with the candidate cell exceeds the RSRP threshold; and RSRQ threshold, RACH-less HO could be triggered if the measured RSRQ associated with the candidate cell exceeds the RSRQ threshold; wherein the time-based criteria may include at least one of the following: a starting time that a RACH-less HO could be triggered, a stopping time that a RACH-less HO could be triggered; wherein the location-based criteria may include at least one of the following: the location information of a reference location and a distance threshold for the UE to determine whether a RACH-less HO could be triggered by comparing the distance threshold with the estimated distance between the location of the UE and the reference location. In an embodiment, the measurement-based criteria further includes a RSSI threshold of a reference signal configured by the HO command.

In the embodiment, each of the RACH-less configuration includes at least one of the following information:
(1) UL timing adjustment information: may include one of the following: (a) a UL timing pre-compensation value (e.g., N_{TA}) to accommodate the propagation delay between the UE and the NW (e.g., the serving NTN-GW or gNB), and (b) the information for UE to estimate the UL timing pre-compensation value for UL timing alignment, including at least one of N_{TA}, common TA parameters, start time or epoch time associated with the UL timing adjustment information, wherein the epoch time may be represented as a time stamp; and
(2) RACH-less duration: a specific period of time during which a UE is allowed to handover to the associated cell by applying the associated UL timing adjustment information without performing Random Access (RA) procedure. RACH-less duration could be configured as one of the following: (a) a startTime that RACH-less HO to the associated cell is allowed. The startTime could be indicated by SFN and subframe, or by a NTP (network time protocol) time; (b) a startTime and a duration, wherein startTime: the starting time that RACH-less HO to the associated cell is allowed. The startTime could be indicated by SFN and subframe, or by a NTP (network time protocol) time, wherein the duration: the duration that RACH-less HO is allowed and the duration could be indicated by a length of time or a timer, e.g., in unit of slot, subframe, millisecond, second; (c) a timer, starts upon reception of the HO command and could be indicated in unit of slot, subframe, millisecond, second.

In the embodiment, the RACH-based configuration includes at least one of the following information:
(1) Timing adjustment information, including the information for UE to estimate the UL timing pre-compensation value, e.g., N_{TA}, common TA parameters, start time or epoch time associated with the TA assistance info. The UE may use timing adjustment information for performing UL timing alignment with the the associated cell.
(2) Random Access Resource configuration, includes information related to random access resource for the UE to perform initial access via Random Access Channel (RACH) to the associated cell.

In an embodiment, UE behaviors upon the reception of a HO command includes: the UE releases the connections with the serving cell(e.g., source cell), starts the running of a general HO timer, composes a RRCReconfigurationComplete message for the confirmation of a RACH-less HO to the target cell. Next, UE performs UL resource selection procedure, wherein if RACH-less HO procedure is not successfully completed, UE performs RACH-based handover procedure, wherein if whole HO procedure(includes the RACH-less and RACH-based HO procedure) is not successfully completed by the expiry of the general HO timer, UE performs connection recovery procedure.

In step S820, determining, by the UE, a target cell according to the at least one cell configured by the HO command.

In an embodiment, the step of determining the target cell according to the at least one cell configured by the HO command includes one of the following operation:
Operation(1): determining, by the UE, the target cell according to a CHO execution condition(also referred to as HO execution condition) associated with each of the at least one cell configured by the HO command, wherein when a target CHO execution(e.g., a fulfilled HO execution condition) condition is fulfilled, the target cell associated with the target CHO execution condition is determined. In other words, in operation(1), the target cell is determined based on a fulfilled CHO execution condition (i.e., target CHO execution condition associated to the target cell). The CHO execution condition may be configured according to the UE measured signal strength or signal qualify associated with a cell, the starting or stopping of the service time of a cell serving the location of the UE, or the distance between the UE and the reference location of a cell (e.g., the center of the cell). Furthermore, the HO command which has the CHO execution conditions may be referred to as CHO command.
Operation(2): determining, by the UE, a pre-configured cell configured by the HO command as the target cell. In other words, in operation(2), the target cell is pre-configured by the source cell in the HO command.

In the embodiment, the UE starts a running of a general HO timer(e.g., RRCReconfiguration timer) when the target cell is determined.

Next, in step S830, performing, by the UE, a UL resource selection procedure to select a target UL transmission resource associated with the target cell for performing a target UL transmission to the target cell. The UL resource selection procedure is performed by a UE to select a UL resource for a RRCReconfigurationComplete message to be transmitted to the target cell to confirm a RACH-less HO to the target cell.

In an embodiment, if a pre-allocated UL grant is configured for the UE to perform UL transmission to the target cell: the UE determines whether the nearest upcoming UL Tx(transmission) resource(the earliest one applicable UL Tx resource) for UE to confirm the RACH-less HO is within one of the RACH-less duration included in one of the RACH-less configurations, wherein if the nearest upcoming UL Tx resource(e.g., the target UL Tx resource) is within the RACH-less duration, the UE further determines whether a RACH-less HO condition(e.g., a measurement-based criteria) is fulfilled.

For example, if measurement-based criteria is configured and the measurement-based criteria is fulfilled, the UE uses the UL Tx resource to perform RACH-less HO confirmation procedure; else, the UE determines that the UL resource selection procedure is not successfully completed.

In an embodiment, If pre-allocated UL grant is not configured, the UE monitors PDCCH addressed to the C-RNTI assigned by the target cell for the UE for a dynamic UL grant if the current time of UE is within one of the RACH-less duration. If a dynamic UL grant is obtained by the UE and the general HO timer and the ulResource validity timer are not expired, the UE determines whether a RACH-less HO condition(e.g., a measurement-based criteria) is fulfilled.

For example, if measurement-based criteria is configured and the measurement-based criteria is fulfilled(and the general HO timer and the ulResource validity timer are not expired), the UE uses the dynamic UL grant corresponding to a dynamic UL Tx resource to perform RACH-less HO confirmation procedure; else, the UE determines that the UL resource selection procedure as not successfully completed.

If the general HO timer or the ulResource validity timer is expired without obtaiing any dynamic UL grant, the UE determines that the UL resource selection procedure is not successfully completed.

In an embodiment, if the UL resource selection procedure is not successfully completed, the UE determines that the RACH-less HO procedure is not successfully completed.

In step S840, performing, by the UE, a HO confirmation procedure with the target cell by applying a UL timing adjustment information associated with the selected UL resource (i.e., the target UL transmission resource) to perform the UL transmission to the target cell. In step S850, determining, by the UE, that the RACH-less HO procedure is successfully completed.

In an embodiment, the HO confirmation procedure including one of the following: a RACH-less HO procedure; a RACH-based HO procedure; and a connection recovery procedure. In an embodiment, the connection recovery procedure includes a RRC connection reestablishment procedure.

Specifically, in an embodiment, the RACH-less HO procedure includes:
transmitting a first UL message to the target cell by applying the UL timing adjustment information associated with the target UL transmission resource for UL timing alignment with the target cell; starting a RACH-less HO timer, wherein the timing for starting the RACH-less HO timer includes one of the following: (1)a timing when transmitting the first UL message and (2) a timing when receiving the HO command; and stopping the RACH-less HO timer upon receiving a confirmation of a successful transmission of the first UL message.

In more detail, in an embodiment, UE transmits a *RRCReconfigurationComplete* message(e.g., first UL message) by using the UL resource selected by the UL resource selection procedure with applying the associated UL timing pre-compensation, and starts the RACH-less HO timer.

If the *RRCReconfigurationComplete* message to confirm the RACH-less HO is transmitted, UE monitors PDCCH addressed to the C-RNTI assigned by the target cell.

Then, if a PDCCH addressed to the C-RNTI assigned by the target cell carrying a UL grant or a positive acknowledgement (to acknowledge the successful reception of *RRCReconfiguraitonComplete*) is received prior to the expiry of the associated RACH-less HO timer, UE determines that the RACH-less HO is successfully completed, and stops the RACH-less HO timer.

Else if the monitored PDCCH does not carry the UL grant and the positive acknowledgement, the UE determines that the RACH-less HO procedure as not successfully completed.

In an embodiment, if the RACH-less HO procedure is considered as not successfully completed, if the general HO timer is not expired and the time at UE (i.e., the current time measured by the UE) is not beyond the validity duration of RACH-less resource, the UE may perform a second RACH-less HO procedure by applying the UL resource selected by a second UL resource selection procedure.

In an embodiment, the acknowledgement could be a MAC CE, e.g., carrying a timing advance value for the first TA adjustment for the following UL transmission. Or, the acknowledge could be a HARQ feedback to acknowledge the successful reception of the first UL transmission of the UE.

In an embodiment, the step of determining, by the UE, that the RACH-less HO procedure is successfully completed includes: receiving a positive acknowledgement, by the UE, from the target cell, wherein the positive acknowledgement is transmitted by one of the following: a PDCCH (Physical Downlink Control Channel) indication addressed to the C-RNTI for the UE associated with the target cell; a MAC (Medium Access Control) CE (Control Element); and a HARQ (Hybrid Automatic Repeat reQuest) feedback information.

In another aspect, the RACH-based HO procedure includes: starting the running of the general HO timer when receiving the HO command; performing a first UL transmission to the target cell by applying the UL timing adjustment information associated with the target UL transmission resource for UL timing alignment with the target cell; receiving a Random Access Response(RAR) corresponding to the first UL transmission from the target cell, wherein the RAR indicates a timing adjustment value and a UL resource for a target UL transmission; applying the timing adjustment value to the target UL transmission for adjusting UL timing alignment with the target cell; when a fourth UL transmission resource configured by the RACH-less HO configuration is applicable prior to a fifth UL transmission resource indicated by the RAR, applying the fourth UL transmission resource for the target UL transmission; and when the fifth UL transmission resource indicated by the RAR is applicable prior to the fourth UL transmission resource, applying the fifth UL transmission resource for the target UL transmission.

In an embodiment, during the the RACH-based HO procedure, the UE selects a preamble to be transmitted to the interest cell for RACH-based HO:

For 4-step Random Access (RA) procedure, UE transmits the selected preamble to the interest cell with applying the UL timing adjustment information associated with the UL transmission resource for UL timing alignment with the interest cell. If a RAR (Random Access Response) is successfully received by the UE from the interest cell, UE applies the timing adjustment value carried in the RAR (e.g., the Timing Advance value carried by Timing Advance Command (TAC) MAC CE), and UE utilizes the UL resource indicated by the RAR for the UL transmission of the following UL message for RACH-based HO.

For 2-step RA procedure, UE utilizes the 2-step RA resource configuration for RACH-based HO with applying the UL timing adjustment information associated with the UL transmission resource for UL timing alignment with the interest cell to perform MsgA transmission. MsgA is part of the RACH-based procedure and is used by the UE to send a RACH request to the target cell. The MsgA contains the UE's RACH request information, such as the UE's identity, a PUSCH (Physical Uplink Shared Channel) content such as a *RRCReconfigurationComplete* message, and so on.

In an embodiment, if the RA procedure is successfully completed, UE determines that the RACH-based HO procedure is successfully completed and stops the general HO timer; else, UE determines that the RACH-based HO procedure is not successfully completed.

In an embodiment, if the RACH-less HO procedure is determined as not successfully completed but the general HO timer is not expired, UE performs another RACH-based HO procedure; else, UE determines that the Handover procedure as not successfully completed.

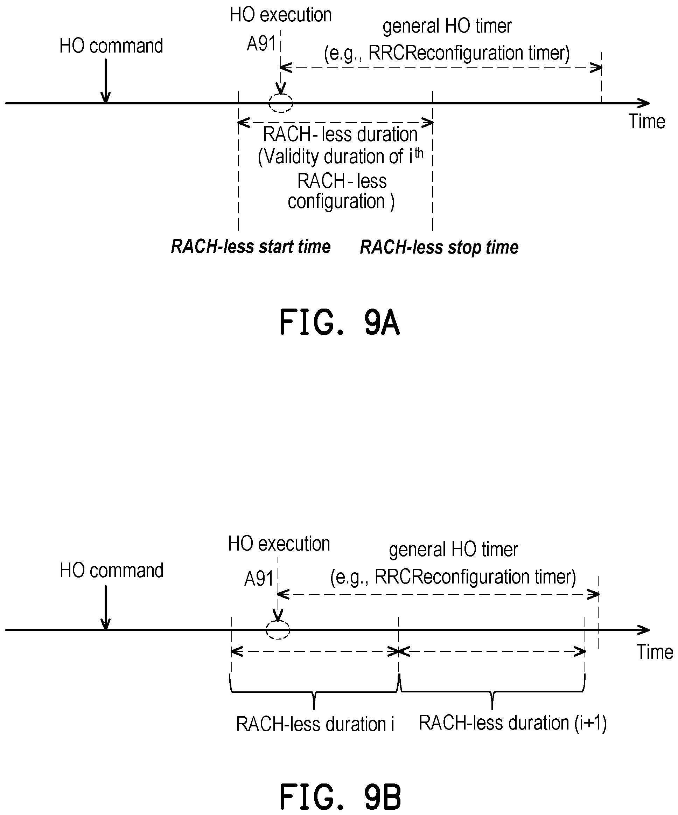

FIG. 9A is a schematic diagram that illustrate a CHO execution condition is fulfilled within a single RACH-less duration according to an exemplary embodiment of the present disclosure. FIG. 9B is a schematic diagram that illustrate a CHO execution condition is fulfilled within one of multiple RACH-less durations according to an exemplary embodiment of the present disclosure.

Referring to FIG. 9A and FIG. 9B, after UE receives HO command from the source cell, the UE may identify one RACH-less duration(e.g., defined by the RACH-less start time and RACH-less stop time as illustrated by FIG. 9A) configured in the RACH-less configuration corresponding to each of the candidate cells by the HO command. Furthermore, assuming the HO command carries a CHO execution condition of each of the candidate cells. As illustrated by arrow A91, when a CHO execution condition corresponding to one candidate cell is fulfilled, the UE may determine this one candidate cell as the target cell, start to perform the HO execution and start the running of the general HO timer(e.g., RRCReconfiguration timer). In FIG. 9B, the difference between FIG. 9A and FIG. 9B is each of the candidate cell has multiple RACH-less durations configured in the corresponding RACH-less configuration carried in the HO command. In FIG. 9B the UE applies the RACH-less configuration associated with the RACH-less duration in which the HO execution condition is fulfilled to perform the HO procedure.

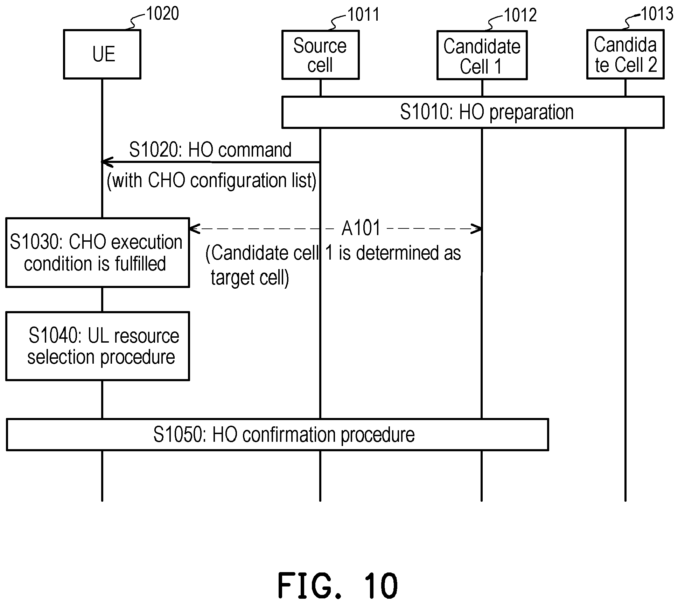

FIG. 10 is a schematic diagram that illustrates performing RACH-less HO when a CHO execution condition is fulfilled according to an exemplary embodiment of the present disclosure. The RACH-less HO procedure includes steps S1010 to S1050. Assuming that the network side includes a source cell 1011, a candidate cell_1 1012 and a candidate cell_2 1013, and the UE 1020 currently is connected to the source cell 1011.

In step S1010, the source cell 1011 and candidate cells 1012-1013 communicate for exchanging information needed to establish the HO procedure. For example, the preparation may consist one of the following information: the threshold of UE measured signal strength or quality for selecting the candidate cell as the target cell; RACH-less HO parameters(including e.g., the timing adjustment information for executing RACH-less HO, UL resource for performing RACH-less HO to the candidate, the validity duration of RACH-less resource, etc.); the C-RNTI for identifying the UE in the candidate cell.

In step S1020, source cell 1011 transmits HO command(also called as CHO command) to the UE 1020. The CHO command may include CHO configuration list including CHO configurations corresponding to candidate cells 1012-1013, and each of the CHO configurations has a CHO execution condition corresponding to each of the candidate cells 1012-1013.

In step S1030, the UE 1020 determines whether one of the CHO execution condition is fulfilled. For example, as illustrated by arrow A101, in response to determining that one CHO execution condition (e.g., target CHO execution condition) corresponding to a candidate cell_1 1012 is fulfilled, the UE 1020 determines that the candidate cell_1 is the target cell.

In step S1040, the UE 1020 performs UL resource selection procedure. For example, the target UL resource can be determined/selected based on the HO execution time or RACH-less HO conditions. The target UL resource can be distributed via RRC signaling or MAC CE.

In step S1050, HO confirmation procedure may be performed by the UE 1020 and the target cell 1012. The target cell 1012 may transmit a positive acknowledge to the UE 1020 for notifying that the RACH-less HO procedure is completed successfully.

In an embodiment, UL resource selection procedure includes:
(1) when a RACH-less HO condition for applying RACH-less HO configuration is configured and satisfied or a RACH-less HO condition is not configured, the UE selects a first UL transmission resource corresponding to the RACH-less HO configuration as the target UL transmission resource according to the RACH-less HO configuration associated with the target cell, wherein the first UL transmission resource is capable of being used by the UE to perform the target UL transmission within the validity duration of RACH-less resource.
(2) when the RACH-less HO condition is configured and is not satisfied and the general HO timer is not expired, the UE selects a second UL transmission resource corresponding to the RACH-based HO configuration as the target UL transmission resource according to the RACH-based HO configuration associated with the target cell.
(3) when the RACH-less HO procedure is not completed successfully and the general HO timer is not expired, the UE selects a third UL transmission resource corresponding to the RACH-based HO configuration as the target UL transmission resource according to the RACH-based HO configuration associated with the target cell.

In an embodiment, after the target cell is determined, the UE perform the UL resource selection procedure. When starting the UL resource selection procedure, the UE determines whether the current time(the time point of the starting of the UL resource selection procedure) is within the validity duration of RACH-less resource, wherein if the current time is within the validity duration of RACH-less resource, the UE further determines whether the RACH-less HO condition is configured and satisfied, so as to select a UL resource from the RACH-less HO configuration or the RACH-based HO configuration.

In an embodiment, the source cell configures a UE with one or more candidate cells by CHO command with carrying a CHO configuration list. The CHO configuration list includes one or more CHO configuration corresponding to one or more candidate cells.

The CHO configuration includes at least one of following information:
(1) A cell ID: cell ID of the target cell, e.g., a PCI, a Cell Global ID (CGI);
(2) A C-RNTI: the C-RNTI to be used in the target cell to identify the UE;
(3) At least one CHO execution condition: each CHO execution condition comprises at least one event, wherein when the at least one event is met, the CHO execution condition is considered as fulfilled, wherein the event may associate with: a measurement-based threshold, a location-based threshold, or a time-based threshold, wherein each event may comprises an entering condition to present the start of the event and /or a leaving condition to present the end of the fulfillment of the event;
(4) a general HO timer (also referred to as RRCReconfiguration timer): a timer for managing the success or fail of a HO procedure to change connections of a UE from a first cell to a second cell;
(5) The RACH-based HO configuration, a handover configuration for UE to perform RACH-based HO to the target cell;
(6) RACH-less CHO configuration list: include at least one RACH-less CHO configuration;
(7) A RACH-less HO timer: a timer for managing the success or fail of an UL transmission attempt to confirm the RACH-less HO. RACH-less HO timer may start upon the latest UL transmission to confirm the RACH-less HO. The timer could be indicated by a length of time, e.g., in unit of slot, subframe, millisecond, second;

Each of the RACH-less CHO configuration includes at least one of following information:
(1) UL resource(ulResource): if configured, the resource is used for the UE to perform the UL transmission to confirm the RACH-less HO to the associated cell. The ulResource could be e.g., a type 1 configured grant (which is configured by RRC message), or a specific UL resource configured by a time and frequency configuration, wherein the ulResource may associated with a beam associated information, or a subcarrier space and a UE-specific search space;
(2) UL resource validity time: if configured, presents the validity time of ulResource for RACH-less HO. The validity time could be indicated by a length of time or a timer, e.g., in unit of slot, subframe, millisecond, second; and
(3) A RACH-less HO condition, for applying the RACH-less HO configuration, wherein the RACH-less HO condition includes one of the following: a measurement-based criteria, a time-based criteria and a location-based criteria, wherein UE may only perform RACH-less HO to the target cell when one of the RACH-less HO condition is fulfilled, wherein the measurement based criteria includes at least one of the following: RSRP threshold, RACH-less HO could be triggered if the measured RSRP associated with the candidate cell exceeds the RSRP threshold; and RSRQ threshold, RACH-less HO could be triggered if the measured RSRQ associated with the candidate cell exceeds the RSRQ threshold.

In an embodiment, UE behavior upon the reception of a CHO command includes: the UE starts to evaluate the CHO execution conditions according to the CHO configuration, wherein if the CHO execution condition of a CHO configuration is fulfilled it is allowed to perform HO to the target cell, the UE performs UL resource selection procedure according to the RACH-less HO configuration. If the RACH-less HO is not completed successfully, the UE performs RACH-based HO procedure. If the RACH-based HO procedure is not completed successfully, the UE performs connection recovery procedure (e.g., a RRC Reestablishment procedure).

In an embodiment, when multiple candidate cells satisfy the CHO execution conditions, the UE can prioritize the cell that satisfies the CHO execution condition within the associated validity duration of RACH-less resource, wherein if multiple candidate cells are satisfied within the associated validity duration of RACH-less resource, the UE may select one from the candidate cells satisfy the CHO execution condition, e.g., the UE may select one candidate cell having the earliest time at which the corresponding CHO execution condition is fulfilled.

In an embodiment, if pre-allocated/pre-configured UL grants are configured for the UE to perform UL Tx to the target cell, the UE will determine whether the current time is within the validity duration of RACH-less resource. If a nearest upcoming UL resource for UE to perform the UL Tx is within one of the validity duration of RACH-less resource corresponding to the target cell, the UE further determines whether a RACH-less HO condition is fulfilled. If the RACH-less HO condition (e.g., measurement-based criteria) is not configured or the RACH-les HO condition is configured and is fulfilled, the UE applies the timing adjustment information associated with the RACH-less duration to perform UL timing adjustment to align with the target cell timing and use this UL Tx resource to perform RACH-less HO confirmation procedure; else, the UE considers the UL resource selection procedure as not successfully completed.

If the current time (the time measured at UE) for performing the UL resource selection procedure is prior to any one of the RACH-less duration, or the current time for performing the UL resource selection procedure is beyond the validity duration of RACH-less resource, the UE considers the UL resource selection procedure as not successfully completed.

In an embodiment, if pre-allocated/pre-configured UL grants are not configured, the UE may obtain a dynamic UL Tx resource from the target cell by monitoring the PDCCH addressed to the UE C-RNTI of the target cell.

Specifically, if the current time is within one of the RACH-less duration, the UE monitors PDCCH addressed to the C-RNTI assigned by the target cell for a dynamic UL grant. Else if the current time is prior to any one of the RACH-less duration, the UE waits until the starting of the nearest upcoming RACH-less duration to monitor PDCCH addressed to the C-RNTI assigned by the target cell for a dynamic UL grant.

If a dynamic UL grant is obtained by the UE via the PDCCH, the UE further determines whether the RACH-less HO condition is configured and fulfilled. Wherein if the RACH-less HO condition is not configured or if the ACH-less HO condition is configured and fulfilled, the UE uses the obtained dynamic UL grant to perform RACH-less HO confirmation procedure; else, the UE considers the UL resource selection procedure as not successfully completed.

If a dynamic UL grant is not obtained after the RACH-less duration, the UE considers the UL resource selection procedure as not successfully completed.

In an embodiment, if the UL resource selection procedure is not successfully completed, the UE considers the RACH-less HO procedure is not successfully completed.

Regarding the RACH-less HO confirmation procedure, the RACH-less HO confirmation procedure is performed by a UE to transmit a *RRCReconfigurationComplete* message to target cell to confirm a HO to the target cell.

In more detail, UE transmits a *RRCReconfigurationComplete* message by using the UL resource selected by the UL resource selection procedure with applying the associated UL timing adjustment information (e.g., UL timing pre-compensation value), and starts the running of RACH-less HO timer.

If the *RRCReconfigurationComplete* message to confirm the RACH-less HO is transmitted, UE monitors PDCCH addressed to the C-RNTI assigned by the target cell.

If a PDCCH addressed to the C-RNTI assigned by the target cell carrying a UL grant and a positive acknowledgement (to acknowledge the successful reception of a *RRCReconfiguraitonComplete*) is received by the expiry of the RACH-less HO timer, UE considers the RACH-less HO as successfully completed, and stops the RACH-less HO timer; else, the UE considers the RACH-less HO is not successfully completed.

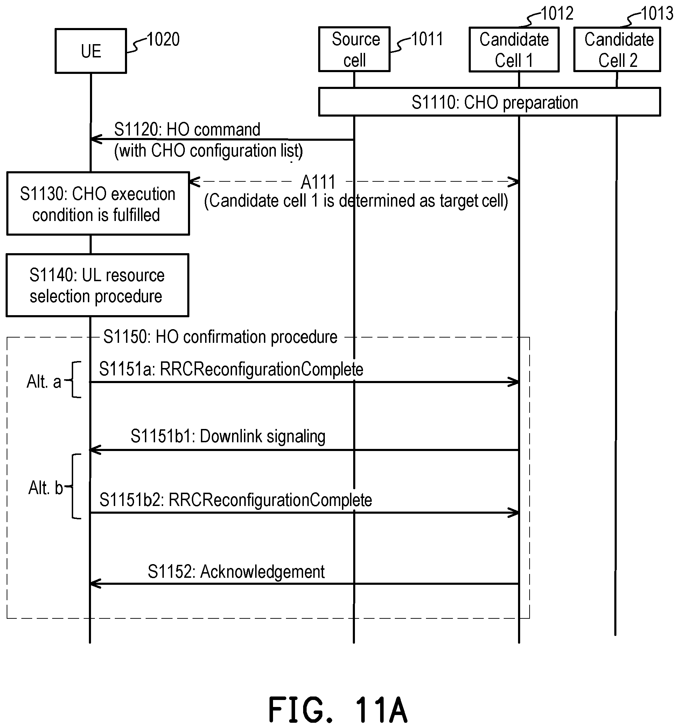

FIG. 11A is a schematic diagram that illustrates, for a CHO command, HO confirmation procedure of the RACH-less HO for indicating RACH-less HO successfully complete according to an exemplary embodiment of the present disclosure. For example, referring to FIG. 11A, the RACH-less HO procedure includes steps S1110 to S1150. Assuming that the network side includes a source cell 1011, a candidate cell_1 1012 and a candidate cell_2 1013, and the UE 1020 currently is connected to the source cell 1011. Steps S1 1 10-S1 140 are similar to step S1010-S1040, and the details thereof are omitted. Furthermore, as illustrated by arrow A111, assuming that candidate cell_1 is determined as the target cell by step S1130.

In S1150. HO confirmation procedure may be performed by the UE 1020 and the target cell 1012. Step S1150 includes two steps, S1151(e.g., sending *RRCReconfigurationComplete* message to the target cell 1012 by the UE 1020) and S1152(e.g., receiving response from the target cell 1012 by the UE 1020), wherein step S1151 includes two alternatives(alt.a and alt.b), the alt.a includes step S1151a, and the alt.b includes steps S1151b1 and S1151b2.

In step S1151a, the UE 1020 sends *RRCReconfigurationComplete* message to the target cell 1012 via a pre-configured/pre-allocated UL resource(i.e., target UL resource) of the target cell 1012.

In step S1151bl, a PDCCH addressed to C-RNTI assigned by the target cell 412, carrying dynamic UL grants, is sent to the UE 1020. In other words, the target cell 1012 transmits determined UL grants to the UE 1020 through the PDCCH.

In step S1151b2, the UE 1020 sends *RRCReconfigurationComplete* message to the target cell 1012 via a target UL resource of the target cell 1012, wherein the target UL resource is assigned by step S1151b1.

In S1152, the target cell 1012 may send an acknowledgement of *RRCReconfigurationComplete* to the UE 1020. When receiving the (positive) acknowledgement of *RRCReconfigurationComplete,* the UE 1020 determines that the RACH-less HO procedure is completed successfully.

If the RACH-less HO procedure cannot be completed successfully in time (e.g., an acknowledgement of *RRCReconfigurationComplete* is not received by the expired of the RACH-less HO timer, or the PDCCH addressed to the C-RNTI assigned by the target cell for the UE before the expiry of the RACH-less HO timer) and the general HO timer is not expired, the UE 420 may use the RACH-based HO procedure to implement the HO.

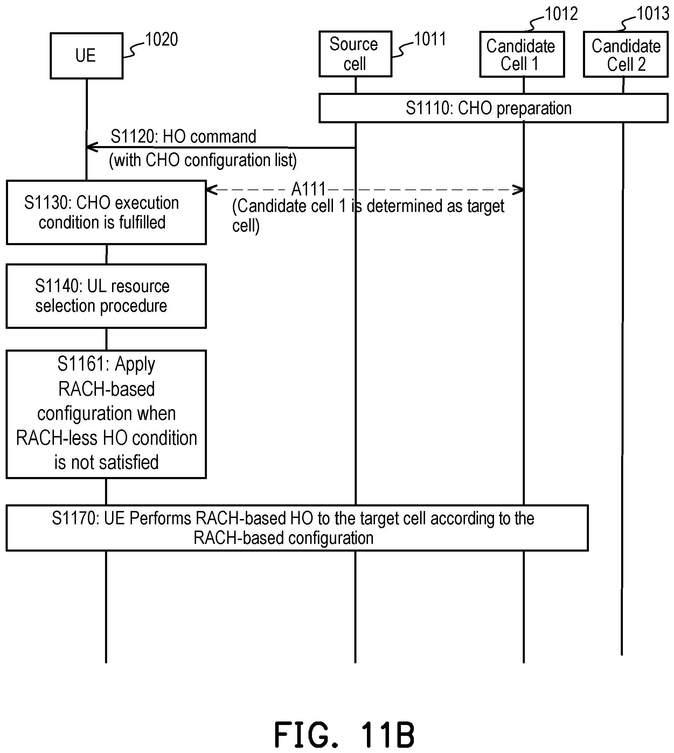

FIG. 11B is a schematic diagram that illustrates, for a CHO command, performing RACH-based HO when RACH-less HO condition is not satisfied according to an exemplary embodiment of the present disclosure. Referring to FIG. 11B, steps S1110-S1140 are the same as the steps S1010-S1040 in FIG. 11A, and the details thereof are omitted.

In step S1161, the UE 1020 applies RACH-based configuration when RACH-less HO condition is not satisfied. Specifically, in response to determining that none of the configured RACH-less HO condition is satisfied, the UE 1020 applies the RACH-based configuration carried by the CHO command received in step S1120.

Next, in step S1 170, UE 420 performs RACH-based HO procedure to the target cell 1012 according to the RACH-based configuration of the CHO command.

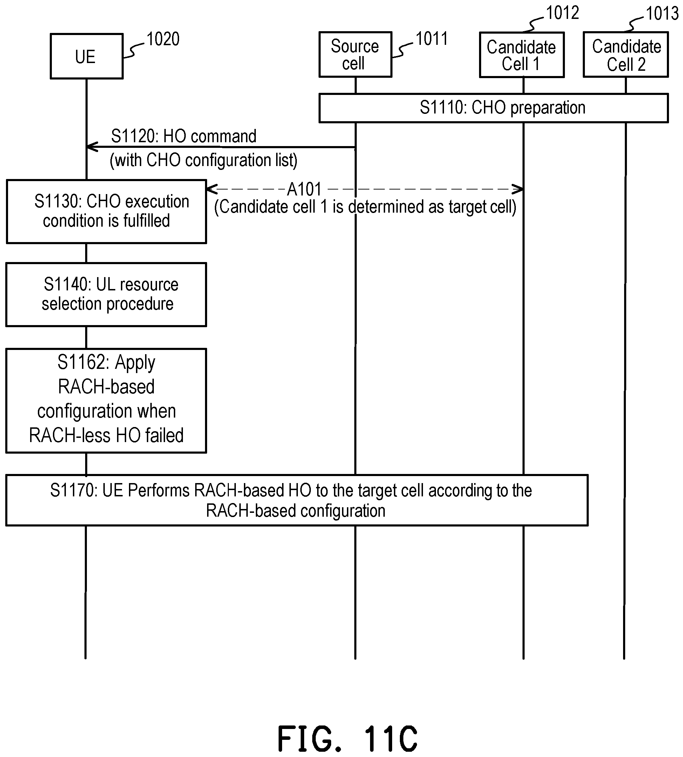

FIG. 11C is a schematic diagram that illustrates, for a CHO command, performing RACH-based HO when RACH-less HO failed according to an exemplary embodiment of the present disclosure. Referring to FIG. 11C, steps S1110-S1140 and S1170 are the same as the steps steps S1110-S1140 and S1170 in FIG. 11B, and the details thereof are omitted.

In step S1162, the UE 1020 applies RACH-based configuration when RACH-less HO failed. Specifically, in response to determining that the RACH-less HO procedure is failed(e.g., receiving a "negative" acknowledge from the target cell 1012 or the RACH-less HO timer is expired) and the general HO timer is not expired, the UE 1020 applies the RACH-based configuration carried by the CHO command received in step S1120.

Next, in step S1170, UE 420 performs RACH-based HO procedure to the target cell 1012 according to the RACH-based configuration of the CHO command.

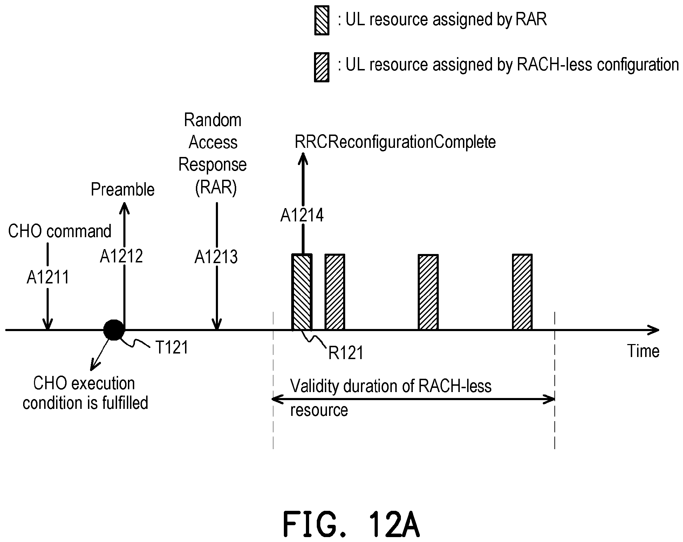

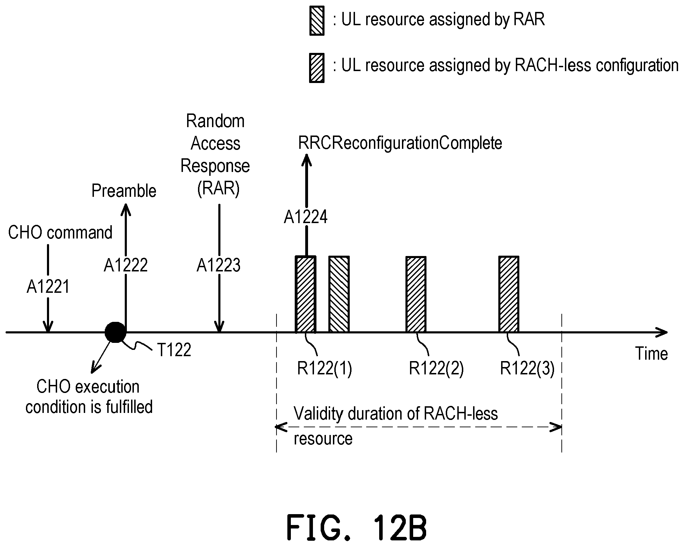

In an embodiment, during the the RACH-based HO procedure. the UE selects a preamble to be transmitted to the interest cell for RACH-based HO: For 4-step Random Access (RA) procedure, UE transmits the selected preamble to the interest cell with applying the UL timing adjustment information associated with the interest cell. If a RAR (Random Access Response) is successfully received by the UE from the interest cell, UE applies the UL timing adjustment information carried in the RAR (e.g., the Timing Advance value carried by TAC MAC CE). Furthermore, if both the resource for the first UL transmission of RACH-less HO and the resource for the following UL transmission of RACH-based HO are applicable, UE may utilize the nearest UL resource for the following UL transmission (e.g., a *RRCReconfigurationComplete* message)(will explain by following FIG. 12A and FIG.12B); else, UE utilizes the UL resource indicated by the RAR for the UL transmission of the following UL message for RACH-based HO. For 2-step RA procedure, UE utilizes the 2-step RA resource configuration for RACH-based HO with applying the UL timing adjustment information associated with the UL transmission resource for UL timing alignment with the interest cell to perform MsgA transmission. MsgA is part of the RACH-based procedure and is used by the UE to send a RACH request to the target cell. The MsgA contains the UE's RACH request information, such as the UE's identity, a PUSCH (Physical Uplink Shared Channel) content such as a *RRCReconfigurationComplete* message, and so on.

In an embodiment, if the RA procedure is successfully completed, UE determines that the RACH-based HO procedure is successfully completed and stops the general HO timer; else, UE determines that the RACH-based HO procedure is not successfully completed.

In an embodiment, if the RACH-based HO procedure is not successfully completed but the general HO timer is not expired, the UE may performs another RACH-based HO procedure; else, the UE considers the HO execution as not successfully completed.

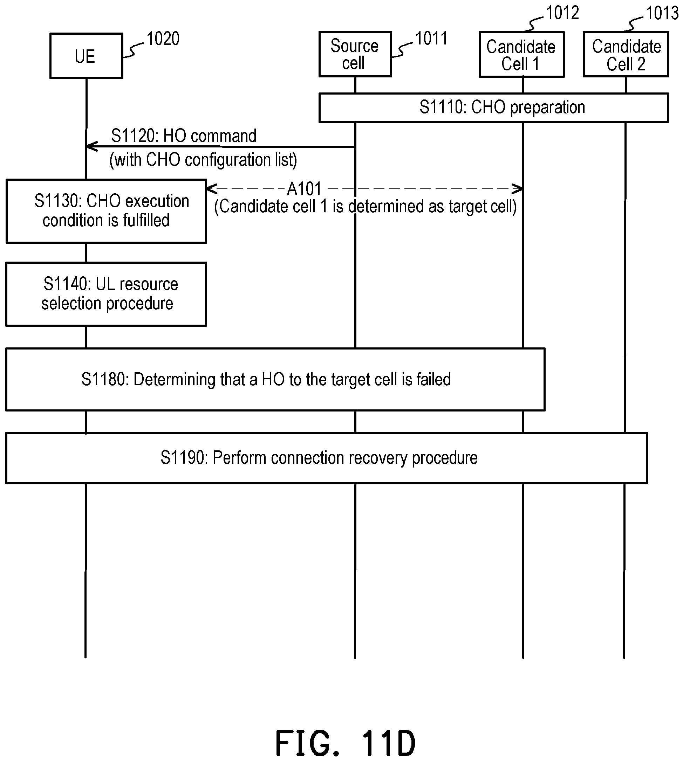

FIG. 11D is a schematic diagram that illustrates, for a CHO command, performing RACH-based HO when HO execution corresponding to the target cell is failed according to an exemplary embodiment of the present disclosure. Referring to FIG. 11D, steps S1110-S1140 are the same as the steps S1110-S1140 in FIG. 11C, and the details thereof are omitted.

In step S1180, the UE 1020 determines that the HO execution is failed when the general HO timer is expired.

Next, in step S1190, UE 1020 performs a connection recovery procedure(e.g., a RRC Reestablishment procedure).

In an embodiment, when a time point for performing the UL resource selection procedure is prior to the validity duration of RACH-less resource of the RACH-less HO configuration: the UE performs a Random Access Resource selection procedure to select a RACH-based resource (including a preamble, a UL transmission resource) configured by the RACH-based HO configuration associated with the target cell for the first UL transmission to the target cell. Then, the UE may receive a Random Access Response (RAR) in response to the first UL transmission to the target cell for a RACH-based HO. The RAR received by the UE may include a second UL transmission resource and a timing advance value carried by a TAC MAC CE. When the RACH-based second UL transmission resource is applicable within the validity duration of RACH-less resource, the UE applies the RACH-based UL transmission resource as the target UL transmission resource and the timing advance value carried in the RAR as the N_{TA} for UL timing adjustment to perform the UL transmission of a RACH-based HO procedure to the target cell; or when the RACH-less UL transmission resource is applicable prior to the RACH-based second UL transmission resource within the validity duration of RACH-less resource, the UE applies a RACH-less UL transmission resource indicated by the RACH-less HO configuration as the target UL transmission resource and applying the timing advance value carried in the RAR as the N_{TA} for UL timing adjustment.

FIG. 12A is a schematic diagram that illustrates applying the earlier RAR UL resource within the validity duration of RACH-less resource for transmitting first UL message (*RRCReconfigurationComplete* message) according to an exemplary embodiment of the present disclosure.

Referring to FIG. 12A, assuming that, a CHO command is received by UE (as indicated by arrow A1211), and a CHO execution condition corresponding to a candidate cell(which will be determined as the target cell of a HO execution) is fulfilled prior to the validity duration of RACH-less resource.

In this case, in response to determining that the CHO execution condition is fulfilled, the UE enables/starts the HO execution at time T121, wherein the UE may transmits a preamble to the target cell corresponding to the fulfilled CHO execution condition (as indicated by arrow A1212). UE may receive from the target cell a RAR (Random Access Response) (as indicated by arrow A1213), wherein the RAR may includes a timing advance value (or a TA value) carried by a TAC MAC CE and a UL resource (also called as RACH-based second UL transmission resource) assigned by the target cell.

Next, during the validity duration of RACH-less resource, as illustrated by FIG. 12A, the RACH-based second UL transmission resource R121 is applicable prior to all the pre-configured UL resources (configured/assigned by RACH-less HO configuration carried by the received CHO command), the UE will apply this RACH-based second UL transmission resource(determined as target UL resource) for performing the following UL transmission(the target UL transmission), e.g., for transmitting the *RRCReconfigurationComplete* message to the target cell (as indicated by arrow A1214).

It should be noted that, in response to receiving a RAR from the target cell, the UE further applies a timing adjustment value (or timing advance value) carried by the RAR to the subsequent target UL transmission for adjusting UL timing alignment with the target cell. That is, the timing adjustment value carried by the RAR from the target cell will be applied at the UL resource R121.

FIG. 12B is a schematic diagram that illustrates applying the earlier pre-configured UL resource within the RACH-less duration for transmitting first UL message (*RRCReconfigurationComplete* message) according to an exemplary embodiment of the present disclosure.

Referring to FIG. 12B, assuming that, a CHO command is received by UE (as indicated by arrow A1221), and a CHO execution condition corresponding to a candidate cell(which will be determined as the target cell of a HO execution) is fulfilled prior to the validity duration of RACH-less resource.

In this case, in response to determining that the CHO execution condition is fulfilled, the UE enables/starts the HO execution at time T122, wherein the UE may transmits a preamble message to the target cell corresponding to the fulfilled CHO execution condition (as indicated by arrow A1222). UE may receive from the target cell a RAR (Random Access Response) (as indicated by arrow A1223), wherein the RAR may includes a timing advance value ( or a TA value) carried by a TAC MC CE and a UL resource (also called as RACH-based second UL transmission resource)assigned by the target cell.

Next, during the validity duration of RACH-less resource, as illustrated by FIG. 12B, first one UL resource R122(1) of the pre-configured UL resources R122(1)-R122(3) is applicable prior to the RACH-based second UL transmission resource, the UE will applying this UL resource R122(1) (determined as target UL resource) rather than RACH-based second UL transmission resource for performing the following UL transmission(the target UL transmission), e.g., for transmitting the *RRCReconfigurationComplete* message to the target cell (as indicated by arrow A1224).

It should be noted that, in response to receiving a RAR from the target cell, the UE further applies a timing adjustment value (or timing advance value) carried by the RAR to the subsequent target UL transmission for adjusting UL timing alignment with the target cell. That is, the timing adjustment value carried by the RAR from the target cell will be applied at the UL resource R122(1).

In other words, by the foregoing mechanism, the HO confirmation procedure will be started as soon as possible, and the latest timing adjustment information carried by the RAR is applied for the UL transmission of the using UL resource, such that the efficiency of the HO execution for the UE, source cell and the target cell will be improved.

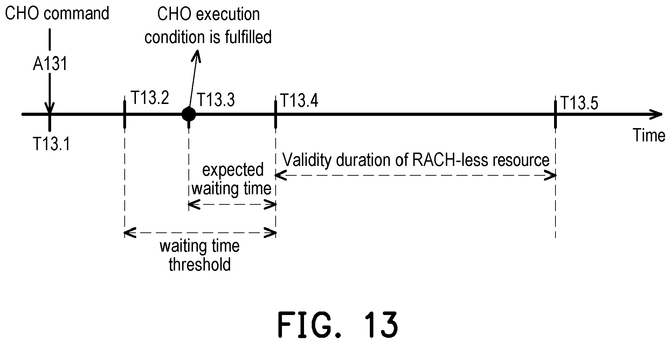

FIG. 13 is a schematic diagram that illustrates considering an expected waiting time and waiting time threshold for the preamble transmission after CHO execution condition is fulfilled before RACH-less duration according to an exemplary embodiment of the present disclosure.

Referring to FIG.13, in an embodiment, the network device(e.g., a source cell, a candidate cell) configures a waiting time threshold to allow UE to wait to perform RACH-less HO to a candidate cell. Assuming that, in FIG. 13, the CHO command is received at time T13.1 (as indicated by arrow A131), a CHO execution condition corresponding to the target cell is fulfilled at time T 13.3, the starting time of the RACH-less duration corresponding to the target cell is time T13.4, and the ending time of the validity duration of RACH-less resource corresponding to the target cell is time T13.5.

In more detail, when performing the UL resource selection procedure prior to the RACH-less available time of the RACH-less HO configuration, the UE determines whether an expected waiting time is less than a waiting time threshold configured by the RACH-less HO configuration, wherein the expected waiting time is a timing difference between the time point for performing the UL resource selection procedure and a starting time of the validity duration of RACH-less resource of the RACH-less HO configuration, wherein in response to determining that the expected waiting time is not less than the waiting time threshold, the UE performs the Random Access Resource selection procedure, wherein in response to determining that the expected waiting time is less than the waiting time threshold, the UE wait till the starting time of the validity duration of RACH-less resource and performs the UL resource selection procedure based on the RACH-less HO configuration.

For example, the waiting time threshold is a specific value(e.g., the length of the time interval between T13.2 and T13.4, wherein the T13.4 is the starting time of the RACH-less duration) before the validity duration of RACH-less resource corresponding to a candidate cell. In an embodiment, the waiting time threshold is set based on a desired time period for performing the preamble transmission and RAR reception of a 4-step RA (Random Access) procedure. The waiting time threshold, which defined as a period of time that a UE could at most wait before the starting of a validity duration of RACH-less resource associated with a RACH-less configuration, may be included in the RACH-less HO configuration.

In the embodiment, when the CHO execution condition is fulfilled before the validity duration of RACH-less resource, the UE may consider the waiting time threshold and the expected waiting time before performing a UL resource selection procedure or before sending the preamble message to the target cell corresponding to the fulfilled CHO execution condition.

Specifically, when the CHO execution condition is fulfilled, the UE calculate the expected waiting time according to the current time estimated at the UE and the starting time of the validity duration of RACH-less resource of the target cell (e.g., the earliest upcoming RACH-less duration), wherein the expected waiting time is the result of the starting time of the validity duration of RACH-less resource minus the current time. Then, the UE determines whether the expected waiting time is less than the waiting time threshold. If the expected waiting time is not less than the waiting time threshold, the UE determining that the expected waiting time is enough for performing the Random Access Resource selection procedure to obtain the RAR from the target cell, and start to perform the Random Access Resource selection procedure (e.g., starts to send the preamble to the target cell). In opposite, if the expected waiting time is less than the waiting time threshold, the UE determining that the expected waiting time is not enough for performing the Random Access Resource selection procedure to obtain the RAR from the target cell, the UE does not perform the Random Access Resource selection procedure (e.g., starts to send the preamble to the target cell) even the CHO execution condition is fulfilled prior to the validity duration of RACH-less resource, and waits till the validity duration of RACH-less resource to apply the pre-configured UL resource therein.

Based on above, the RACH-less HO method and the UE provided by the present disclosure are capable of determining a proper target cell when receiving a HO command from a source cell according to the RACH-less HO configuration and RACH-based HO configuration carried in the HO command; selecting a earliest applicable UL resource to perform the UL transmission to the target cell; and applying a corresponding timing adjustment information to pre-compensate the timing advance of UL transmission for the UL timing alignment with the target cell, such that the overall performance of RACH-less HO in NTN system will be improved, and leads to lower latency during handover.

## Claims

1. A RACH(Random Access Channel)-less handover (HO) method for a user equipment (UE) (120, 420, 1020) in a Non-Terrestrial Network (NTN) system, the method comprising:
receiving, by the UE(120, 420, 1020), a HO command from a source cell(411, 1011) of the NTN system,
wherein the HO command comprises a general HO timer and at least one HO configuration, and the HO configuration comprises a RACH-less HO configuration and a RACH-based HO configuration associated with one of cells of the NTN system,
wherein the RACH-less HO configuration comprises a RACH-less available time and a uplink (UL) transmission resource,
wherein the RACH-less available time is to be applied for the UE(120, 420, 1020) to perform a UL transmission to the associated cell by using the UL transmission resource;
determining, by the UE(120, 420, 1020), a target cell(412,1012) according to the at least one cell configured by the HO command;
performing, by the UE(120, 420, 1020), a UL resource selection procedure to select a target UL transmission resource associated with the target cell(412,1012) for performing a target UL transmission to the target cell(412,1012);
performing, by the UE(120, 420, 1020), a HO confirmation procedure with the target cell(412,1012) by applying a UL timing adjustment information associated with the target UL transmission resource to perform the target UL transmission to the target cell(412,1012); and
determining, by the UE(120, 420, 1020), that the RACH-less HO procedure is successfully completed.

2. The RACH-less HO method according to claim 1, the step of determining the target cell(412,1012) according to the at least one cell configured by the HO command comprises:
determining, by the UE, the target cell(412,1012) according to a HO execution condition associated with each of the at least one cell configured by the HO command, wherein when a HO execution condition is fulfilled, the cell associated with the HO execution condition is determined as the target cell(412,1012); or
determining, by the UE, a pre-configured cell configured by the HO command as the target cell(412,1012).

3. The RACH-less HO method according to claim 1,
wherein the UL resource selection procedure comprises:
when a RACH-less HO condition for applying RACH-less HO configuration is satisfied:
selecting a first UL transmission resource as the target UL transmission resource according to the RACH-less HO configuration associated with the target cell(412,1012), wherein the first UL transmission resource is capable of being used by the UE to perform the target UL transmission within the RACH-less available time;
when the RACH-less HO condition is not satisfied and the general HO timer is not expired:
selecting a second UL transmission resource as the target UL transmission resource according to the RACH-based HO configuration associated with the target cell(412,1012); and
when the RACH-less HO procedure is not completed successfully and the general HO timer is not expired:
selecting a third UL transmission resource as the target UL transmission resource according to the RACH-based HO configuration associated with the target cell(412,1012).

4. The RACH-less HO method according to claim 3, wherein the RACH-less HO condition comprising one of the following:
a measurement-based criteria including at least one RSRP threshold, a RSRQ threshold, a RSSI threshold of a reference signal configured by the HO command;
a time-based criteria including at least one of a starting time, a stopping time configured by the HO command; and
a location-based criteria including at least one of a location information of a reference location and a distance threshold configured by the HO command.

5. The RACH-less HO method according to claim 1, wherein the HO confirmation procedure comprising one of the following:
a RACH-less HO procedure;
a RACH-based HO procedure; and
a connection recovery procedure.

6. The RACH-less HO method according to claim 5, wherein the RACH-based HO procedure comprising:
starting the running of the general HO timer when receiving the HO command;
performing a first UL transmission to the target cell(412,1012) by applying the UL timing adjustment information associated with the target UL transmission resource for UL timing alignment with the target cell(412,1012);
receiving a Random Access Response(RAR) corresponding to the first UL transmission from the target cell(412,1012), wherein the RAR indicates a timing adjustment value and a UL transmission resource for a target UL transmission;
applying the timing adjustment value to the target UL transmission for adjusting UL timing alignment with the target cell(412,1012).

7. The RACH-less HO method according to claim 6, wherein the RACH-based HO procedure further comprising:
when a fourth UL transmission resource configured by the RACH-less HO configuration is applicable prior to a fifth UL transmission resource indicated by the RAR, applying the fourth UL transmission resource for the target UL transmission; and
when the fifth UL transmission resource indicated by the RAR is applicable prior to the fourth UL transmission resource, applying the fifth UL transmission resource for the target UL transmission.

8. The RACH-less HO method according to claim 5, wherein the RACH-less HO procedure further comprising:
transmitting a first UL message to the target cell(412,1012) by applying the UL timing adjustment information associated with the UL transmission resource for UL timing alignment with the target cell(412,1012);
starting a RACH-less HO timer,
wherein the timing for starting the RACH-less HO timer comprises one of the following:
a timing when transmitting the first UL message; and
a timing when receiving the HO command; and
stopping the RACH-less HO timer upon receiving a confirmation of a successful transmission of the first UL message.

9. The RACH-less HO method according to claim 1, wherein the RACH-less HO configuration comprising at least one of the following:
at least one UL transmission resource for transmission of a first UL message to the associated cell;
a validity time corresponding to each of the at least one UL transmission resource;
a RACH-less HO condition for applying the RACH-less HO configuration, wherein the RACH-less HO condition is at least one of a measurement-based criteria, a time-based criteria or a location-based criteria;
a UL timing adjustment information, wherein the UL timing adjustment information comprises information for the UE to adjust transmission timing for UL timing alignment with the the target cell(412,1012); and
a RACH-less available time to indicate a time period during which the UE is allowed to change at least one connection from the source cell(411, 1011) to the associated cell without performing Random Access (RA) procedure,
wherein the RACH-less available time comprises one of the following:
a starting time that the corresponding UL transmission resource is allowed for the RACH-less HO procedure to perform transmission of a first UL message to the target cell(412,1012); or
the starting time and a duration, wherein the duration indicates a time period that the UL transmission resource is allowed, from the starting time, for the RACH-less HO procedure to perform the transmission of the first UL message to the target cell(412,1012); or
the starting time and a stopping time, wherein the stopping time indicates a time upon which the corresponding UL transmission resource is no longer allowed for the RACH-less HO procedure to perform transmission of a first UL message to the target cell (412, 1012).

10. The RACH-less HO method according to claim 1, wherein the RACH-based HO configuration comprising:
the UL timing adjustment information, comprising information for the UE to adjust transmission timing for UL timing alignment with the target cell(412,1012); and
a Random Access Resource configuration, comprising information for the UE to perform initial access via Random Access Channel (RACH) to the target cell(412,1012).

11. The RACH-less HO method according to claim 1, wherein the HO configuration corresponding to each of the at least one cell in the HO command further comprises at least one of the following:
a cell ID;
a C-RNTI;
at least one CHO execution condition;
a RACH-based HO configuration;
at least one RACH-less HO configuration ; and
a RACH-less HO timer.

12. The RACH-less HO method according to claim 1, wherein the step of determining, by the UE, that the RACH-less HO procedure is successfully completed comprises:
receiving a positive acknowledgement, by the UE, from the target cell(412,1012),
wherein the positive acknowledgement is transmitted by one of the following:
a PDCCH (Physical Downlink Control Channel) indication addressed to the C-RNTI for the UE associated with the target cell(412,1012);
a MAC (Medium Access Control) CE (Control Element); and
a HARQ (Hybrid Automatic Repeat reQuest) feedback information.

13. The RACH-less HO method according to claim 1, the method further comprising:
when a time point for performing the UL resource selection procedure is prior to the RACH-less available time of the RACH-less HO configuration:
selecting a RACH-based UL transmission resource configured by the RACH-based HO configuration associated with the target cell(412,1012) for the first UL transmission to the target cell(412,1012);
applying the RACH-based UL transmission resource as the target UL transmission resource to perform the first UL transmission of a RA procedure to the target cell(412,1012) when the RACH-based UL transmission resource is applicable within the RACH-less available time; or
applying a RACH-less UL transmission resource indicated by the RACH-less HO configuration as the target UL transmission resource when the RACH-less UL transmission resource is applicable prior to the RACH-based UL transmission resource within the RACH-less available time.

14. The RACH-less HO method according to claim 13, when performing the UL resource selection procedure prior to the RACH-less available time of the RACH-less HO configuration,
determining whether an expected waiting time is less than a waiting time threshold configured by the HO command, wherein the expected waiting time is a timing difference between the time point for performing the UL resource selection procedure and a starting time of the RACH-less available time of the RACH-less HO configuration,
wherein in response to determining that the expected waiting time is not less than the waiting time threshold, performing the Random Access Resource selection procedure.

15. The RACH-less HO method according to claim 13, the method further comprising:
in response to receiving a RAR from the target cell(412,1012), applying a timing adjustment value carried by the RAR to the subsequent target UL transmission for adjusting UL timing alignment with the target cell(412,1012).

16. A user equipment (UE)(120, 420, 1020), comprising:
a transceiver, used for transmitting or receiving signals;
a memory, used for storing a program code; and
a processor, coupled to the transceiver and the memory, and configured for executing the program code to implement a RACH-less HO method, wherein the RACH-less HO method comprising:
receiving, by the UE(120, 420, 1020), a HO command from a source cell(411, 1011) of the NTN system,
wherein the HO command comprises a general HO timer and at least one HO configuration, and the HO configuration comprises a RACH-less HO configuration and a RACH-based HO configuration associated with a cell of the NTN system,
wherein the RACH-less HO configuration comprises a RACH-less available time and a UL transmission resource, wherein the RACH-less available time is to be applied for the UE to perform a UL transmission to the associated cell by using the UL transmission resource;
determining, by the UE(120, 420, 1020), a target cell(412,1012) according to the at least one cell configured by the HO command;
performing, by the UE(120, 420, 1020), a UL resource selection procedure to select a target UL transmission resource associated with the target cell(412,1012) for performing a target UL transmission to the target cell(412,1012);
performing, by the UE(120, 420, 1020), a HO confirmation procedure with the target cell(412,1012) by applying the UL timing adjustment information associated with the target UL transmission resource to perform the target UL transmission to the target cell(412,1012); and
determining, by the UE(120, 420, 1020), that the RACH-less HO procedure is successfully completed.
